# EUROPEAN PATENT APPLICATION

(11) **EP 4 009 581 A1**
(43) Date of publication of application: **08.06.2022**
(21) Application number: 21020368.3
(22) Date of filing: 15.07.2021
(51) Int. Cl.: H04L 9/40

(54) **SYSTEM AND METHOD FOR ANONYMIZING PERSONAL IDENTIFICATION DATA IN AN AUDIO / VIDEO CONVERSATION**

(30) Priority: 02.12.2020 RO 202000800
(71) Applicant: SC Repsmate Software Srl, 022156 Bucuresti (RO)
(72) Inventor: Rosca, Alin-Gabriel, 020144 Bucuresti (RO)
(74) Representative: Strenc, Alexandru Cristian

(57) **Abstract**

The system and the method for anonymizing the personal data of the persons in an audio/video conversation allows the communication between two or more entities, without the need to request the agreement to record the conversation, while the personal data of the participants are irreversibly anonymized, and the rest of the conversation can be stored and used for other productive purposes.

The solution in compliance with the invention it is based on a general typology of a Communication Network (CN) that transmits and receives information through a Communication Protocol (CP). The latter can facilitate the traffic of data, voice, video and more, hereinafter referred to as conversation, accessing different channels between different devices and software applications. The invention connects to the traffic between the Communications Network (CN) and the Communication Protocol (CP) through an Application Programming Interface (API) intended to intercept these conversations.

The solution can be integrated with this interface, but not limited by it, through a Conversation Anonymization Subsystem (CASS) which takes over these conversations and irreversibly anonymizes personal data. Following anonymization, the conversations are taken over by a Transmission Subsystem (TSS) which sends them as appropriate to an Analysis Server (AS) and / or a Storage Server (SS).

## Description

In compliance with the invention the system and method thereof, allow communication between two or more entities, for example company-client, without the need to request the agreement to record the call, because personal data are irreversibly anonymized and the content of the conversation can be stored and used for other productive purposes for the company.

Technical solution underlying the invention can be applied in any field in which audio and /or video conversations take place between two or more people, both in real time and recorded, and has in view a software system connected to the architecture of communication of an entity, company or institution, communication architecture which in turn can integrate various communication channels such as audio or SMS text messaging system, mobile devices or computers, connected or not via the Internet, conference systems or video and / or audio telephony, or fixed recording devices.

Systems for anonymizing personal or sensitive data, of users who agree that their data be processed are known, but it is worth mentioning that practically, in all existing solutions the ultimate goal of our solution is almost impossible to achieve, for example: in a sales discussion where the script and the line of discussion with customers are very well structured, with a very clear target, and by requesting the customer's agreement, the aforementioned structure may be unbalanced and the target of the discussion may not be reached.

Thus, the solution in the European patent document EP 3 644 253 A1 " Anonymisation of identifier " aims to anonymize unique identifiers, by generating anonymized unique identifiers, which can later recover the original unique identifier, where the unique identifier is in fact the user. Although the solution proposed in the document refers to the fact that the user's data is anonymized, it has the disadvantage that this data can be found when requested.

The solution of the European patent document EP 3 651 157 "Processing of anonymised patient data generated by a mobile medical device" is also known, which refers to the anonymized data of users, which can be brought to its original form or deanonymized, with user agreement. In this case, the user agrees to use the medical device, in order to provide to it the data for a more complex analysis.

The disadvantage of the mentioned solutions is that the user agrees for its data to be used and consequently there is a negative consequence like in case of a cyber attack, as the attackers can deanonymize their data.

Technical problem solved by the invention is to facilitate the use of information coming from a monitored conversation in real time, in order to improve the activities of companies, without seeking the consent of the participants in question to record and implicitly fully comply with the provisions of the General Data Protection Regulation GDPR.

The system and method of anonymization in compliance with the invention, have the role of transforming many processes that can be performed manually, at a very high cost, into an automatic process that can be performed efficiently at a low cost and allows organizations to trust data security and to comply with the protocols and regulations imposed by the General Data Protection Regulation GDPR.

Personal data, according to the General Data Protection Regulation GDPR means any information regarding an identified or identifiable natural person ("data subject"); an identifiable natural person is a person who can be identified, directly or indirectly, in particular by reference to an identifying element, such as a name, an identification number, location data, an online identifier, or one or more many specific elements, proper to his/her physical, physiological, genetic, mental, economic, cultural or social identity;

According to the General Data Protection Regulation GDPR data are anonymized when any identifying element disappears. If a remaining item can help, alone or together with others, to re-identify the person, then anonymization has not been performed and the data should not be kept. Once the data has been completely anonymised, it falls outside the scope of the Regulation.

The technical solution is based on a functional structure that allows the recording and transcription of discussions coming from the communications architecture and the irreversible anonymization, in real time, of personal data and therefore without that the data of users or participants be identifiable, or implicitly either their consent be required for the recording of the discussions, respectively the fulfillment of a functional technical characteristic that is not possible to be achieved based on the known solutions.

The operation of the system and implicitly the development of the anonymization method, is carried out by connecting the software system to the communication architecture, intercepting the conversation between two or more people, recording the temporary discussion and transcribing the data in real time, detecting personal data, followed by the irreversible anonymization thereof and respectively the transmission thereof to the dedicated storage or analysis servers.

The selection of the data to be anonymized is achieved through a parallel weighted connected architecture, in which the weights can be set depending on the use case. Each module in this architecture calculates the probability that a token is or is not information that must be anonymized, and the weighted sum of probabilities returns a global potential that compared to a trashold, set depending on the use of the application, results in the decision to consider a token as sensitive or not. Weights are needed to modulate the importance of components and this architecture also covers cases where one or two of the modules are missing, equivalent to zero weight.

The technical solution according to the invention has the following advantages:
- Improving companies' communication or processes to increase customer satisfaction or the people they interact with;
- Technological evolution by training artificial intelligence models in order to report the analyzed information and assist company representatives;
- Guaranteed security of stored information, in accordance with the General oData Protection Regulation GDPR, without the risk of theft or sharing of information to unauthorized persons.

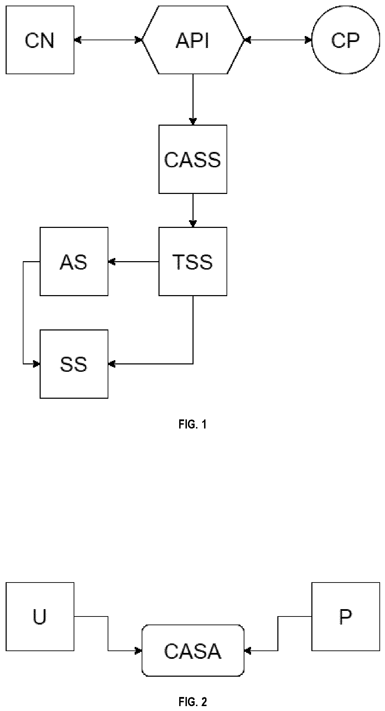

An example of embodiment of the invention is given below, in connection with Fig. 1. 4 representing:
Fig.1 - The overall architecture of the Conversation Anonymization System - CAS;
Fig.2 - Interface of the Anonymization System of Conversations with Participants - IASCP;
Fig.3 - Conversation anonymization subsystem - CASS;
Fig. 4 - Conversation Data Detection Module - CDDM.

FIG. 1 in compliance wirh the invention illustrates a general typology of a Communication Network (CN) that transmits and receives information through a Communication Protocol (CP). The latter can facilitate the traffic of data, voice, video and more, hereinafter referred to as conversation, accessing different channels between different devices and software applications. The invention connects to the traffic between the Communication Network (CN) and the Communication Protocol (CP) through an Application Programming Interface (API) designed to intercept these conversations and provided by the company that facilitates the Communication Network (CN) contracted by the User. (U).

The technical solution in compliance with the invention can be integrated with this interface, but not limited by it, through a Conversion Anonymization Subsystem (CASS) which takes over these conversations and irreversibly anonymizes personal data. Following anonymization, conversations are taken over by a Transmission Subsystem (TSS) which sends them, as appropriate, to an Analysis Server (AS) and / or a Storage Server (SS). Both the Analysis Server (AS) and the Storage Server (SS) may belong to another company contracted or subcontracted by the user. These conversations can be transmitted both in real time, during conversations, and after the connection has been terminated.

FIG. 2 called the Interface of the Anonymization System of Conversations with Participants (IASCP), illustrates the people who carry out the conversation traffic. They are defined as Users (U), any entity, whether company, institution or individual and not only, who use the Conversation Anonymization System Architecture (CASA), to anonymize sensitive data or other Participants (P) who are present in conversations.

Participants (P) are defined as any entity, whether company, institution or individual, but not limited by them or their number, who must agree that these conversations be captured, recorded, structured, stored and more, without their consent, the personal data protection law being breach.

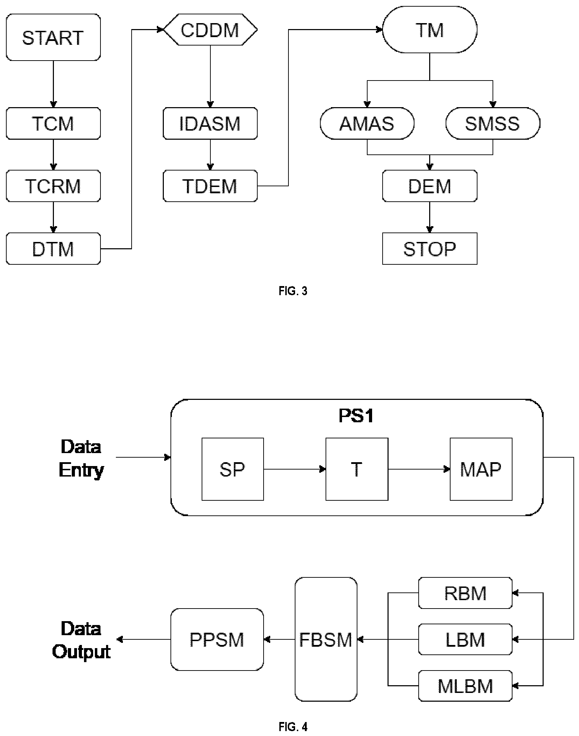

According to the Conversation Anonymization Subsystem (CASS), detailed in Figs. 3 the Start function represents the activation of the Conversation Anonymization Subsystem (CASS), performed automatically when the Communication Protocol (CP) receives a packet traffic. A Traffic Capture Module (TCM) intercepts and captures the conversation automatically, without the need for the intervention of another module. A Temporary Conversation Recording Module (TCRM) aims to keep the original data until it is identified and anonymized. It is functionally preceded by a Data Transcription Module (DTM), which can transcribe conversations for example into audio data (represented by waves, waves, meta data or other data characteristic of the audio format), text data (represented by a transcript written in words), but not limited to them. Following the transcription process, a Conversation Data Detection Module (CDDM) which aims to find personal data, but not limited to them, which can result in the identification of participants in the conversation and has the role of ensuring that all their data are irreversibly anonymized, according to the legislation in force that refers to the General Data Protection Regulation GDPR, but not limited by it, is activated. The aim is to keep only the data from the conversation regarding the compartment, approach, but not limited to it; being part of the category of marketing of products and services. The collection of this data aims to train user representatives and increase the satisfaction of participants in conversations. Thus, the process of processing personal data no longer exists. After this Participant (P) data has been detected, it goes through an Irreversible Data Anonymization Sub-Module (IDASM), which uses different procedures for different types of data, so that the original data can no longer be accessed and implicitly not to be able to identify the participants in the discussion. The Irreversible Data Anonymization Sub-Module (IDASM) can work, but is not limited to working with other submodules when deleting data, so it can be used separately depending on user needs. Once the data has been anonymized, a Temporary Data Erase Module (TDEM) is activated and the original information is deleted. A Transmission Module (TM) has the role of transmitting during the discussion or at its end, all the data collected, as the case may be, to an Analysis Module from the Analysis Server (AMAS) and / or a Storage Module from the Storage Server (SMSS). This whole procedure works non-stop until a Discussion End Module (DEM) is activated that automatically detects when the Communication Protocol (CP) no longer receives packet traffic, resulting in the discussion being terminated and the Stop function being activated.

According to the Conversation Data Detection Module (CDDM), fig. 4 Data Entry function, represents the data from the Data Transcription Module (DTM) that must be analyzed having as main objective the recognition and classification of personal data, considering their class (last name, first name, organization, city, country, personal identification number, socio-economic information, etc.). This is done starting with a Preprocessing Submodule (PS1), in charge with preparing the data for the next submodule and is one of the most important tasks of natural language processing (NLP). This Preprocessing Submodule (PS1) is composed of a Segmentation Process (SP) with the role of segmenting each sentence so that it can be processed individually, without depending on the general context of conversation.

It interacts with a process of Tokenization (T) that divides data by parameterization into unigrams, for example for data transcribed in text, the data is divided into individual words or word sets. In case of our invention, the tokenization of individual words is represented by the space found after each word transcribed individually, and the sets of words are represented by changing the speaker. The mentioned process is followed by a Morphosyntactic Analysis Process (MAP) which analyzes the unigrams, in order to classify them and the label at semantic level in order to provide a structure of these labels under classified form. Depending on the use case (client, data set, etc.), the following three blocks calculate the probability that a token is or is not personal information, which must be anonymized. Weights are needed to modulate the importance of the three components. For example, it is possible that for some applications, the Rule-Based Model will work better, so its weight will be higher, for others more difficult to formalize, or the Machine-Learning Based Model will have a higher weight.

The first block is represented by a Rule Based Model (RBM) that implements different rules to discover some classes of entities, which can be associated with sensitive data related to the category of numbers (e.g.: personal identification number, phone number, insurance number, sole identification code, zip code, etc.), e-mail addresses and some date formats (e.g. date of birth). In addition to these rules there is in some cases an additional validation. This validation is performed for all personal numbers in which there is a control validation, check digit or check amount. This allows us to disambiguate and have greater certainty of cases, such as phone number (e.g.:0040712345678) and personal identification number (e.g.: 1234567890123), both containing 13 digits. For phone number, for example, a set of rules and a set of context words were created. The regex (a regular expression; it is a sequence of characters that define a model) used to extract this entity for Romania was: 13 figures in the form of: prefix [0040] with synonym [+40], followed by {9} digits in the category [0-9]. While the contextual word list for this can be, but not limited to: phone number, contact number, phone, mobile phone, fax, landline, contact. The contextual word list consists of a set of words that usually appear in the context of a phone number. This has been added to the model to resolve errors in some data types because it consists of a specific word or word list for each feature class that must exist in the text to confirm the obtained result.

The second block is a Lexicon Based Model (LBM) that combines the results of the Morphosyntactic Analysis Process (MAP), a set of lexicons, derivation and lemmatization techniques. The purpose is the recognition of the classes of entities (personal data but not limited by them). For each entity, we use different lexicons with their own specific characteristics. This type of implementation consists in comparing the tokens present in the text with the lexicon and understanding if they correspond to the same entity. We want that all entities are implemented with machine learning models, in order to understand how to get the best results for each data class.

The third block is a Machine Learning Based Model (MLBM) used to discover classes of entities with higher ambiguity or for cases where there are no well-defined rules. This last model has the best results due to the neural networks. Using this architecture we can also cover cases in which one or two of the three modules are missing, equivalent to zero weight. Following the analysis of the three blocks, a Function Block Submodule (FBSM) is activated which calculates the weighted sum of the probabilities in order to detect the global potential which, compared to a threshold, leads to the decision to consider the token sensitive or not.

Finally, the system has a Post-Processing Submodule (PPSM) which has the role of returning the identified entities, in the wanted format and activating the Data Output function.

Real-time call transcription can be fundamental to the application's internal operation of irreversibly anonymizing conversations. Irreversible anonymization of data aims to eliminate the need to obtain the consent of participants in a conversation, so that it is recorded, according to current legislation. This is possible because the data is deleted during the conversation and is not saved and processed.

Irreversibly anonymized data obtained by users may be stored in large record libraries to improve their recognition capabilities and to help develop new products that can then be offered to the general market.

In order to avoid any reversibility of anonymized conversations, gorss or original historical documents will not be saved or kept, the original data being automatically deleted when they were anonymized during the conversation.

## Claims

1. System for anonymizing the identification data of persons in an audio/video conversation, connected to the traffic between a Communications Network (CN) and a Communication Protocol (CP) through an Application Programming Interface (API) intended for the interception of the conversation which is subject to the data anonymisation procedure and which, after anonymisation, allows conversations to be taken over by a Transmission Subsystem (TSS) which sends them as appropriate to an Analysis Server (AS) and / or a Storage Server (SS), **characterized in that** it has in its structure a Conversation Anonymization Subsystem (CASS) specially designed for recording, transcribing relevant discussions coming from the communications architecture and irreversible real-time anonymization of personal data,without the users' data being identifiable, or implicitly requiring the consent of these users to record the discussions.

2. System for anonymizing the identification data of persons in an audio/video conversation according to claim 1, **characterized in that** the Conversation Anonymization Subsystem (CASS) is activated by a Start function automatically when the Communication Protocol (CP) receives a packet traffic and consists of a Traffic Capture Module (TCM) that intercepts and captures the conversation, automatically, without the need for the intervention of another module, a Temporary Conversation Recording Module (TCRM) that aims to store data until they are identified and anonymized, a Data Transcription Module (DTM), which can transcribe conversations for example into audio data represented by waves, meta data or other data characteristic of the audio format, text data represented by a transcript written in words, without being limited by them, a Conversation Data Detection Module (CDDM) that aims to find personal data, but not limited only by them, which can lead to the identification of participants from the conversation and has the role of ensuring that all their data are irreversibly anonymized, an Irreversible Data Anonymization Submodule (DAS), which uses different procedures for different types of data, so that the original data can no longer be accessed and implicitly the participants in the discussion not identified, a Temporary Data Deletion Module (TDDM) activated after the original data is anonymized and the relevant information is deleted,a Transmission Module (TM) with the role of transmitting during or at the end of the discussion, all data being collected as appropriate by an Analysis Module from the Analysis Server (AMAS) and or a Storage Module from the Storage Server (SMSS), and a Discussion End Module (DEM) that automatically detects when the Communication Protocol (CP) no longer receives packet traffic.

3. Method for anonymizing the personal data of the persons in an audio /video conversation, implemented on the system of claims 1 and 2, **characterized in that** it involves completing the following functional steps:
- Step 1 - the data packet traffic subject to analysis is received through the communication protocol (CP);
- Step 2 - the conversation is intercepted and captured automatically;
- Step 3 - the conversation is transcribed as appropriate in audio data, text data or similar;
- Step 4 - the conversation is temporarily recorded in order to keep the original data until they are identified and anonymized;
- Step 5 - the data from the conversation is detected by finding personal data, but not limited only by them, which can result in the identification of the participants in the conversation, having the role of ensuring that all their data are irreversibly anonymized;
- Step 6 - the irreversible anonymization of data using different procedures for different types of data is achieved, so that the original data can no longer be accessed and implicitly can not lead to the identification of the participants in the discussion;
- Step 7 - the temporary data and the original information is deleted;
- Step 8 - all collected data are transmitted during the discussion for analysis and / or as the case may be for storage;
- Step 9 - automatically detects the situation in which the system no longer receives packet traffic, resulting in the discussion being terminated.

4. Method for anonymizing the personal data of the persons in an audio /video conversation according to claim 3, **characterized in that** in order to implement step 6 intended to achieve irreversible anonymization of the data, the following procedural steps shall be followed:
- the transcribed data are preprocessed through a segmentation process (SP) with the role of segmenting each sentence so that it is processed individually, without depending on the general context of the conversation;
- conducting a process of tokenization (T) that divides the data by parameterization in unigrams, so that the tokenization of individual words is represented by the space found after each word transcribed individually, and the word sets are represented by changing the speaker;
- carrying out a morphosyntactic analysis process (MAP) that analyzes unigrams, to classify them and label them semantically to provide a structure of these labels in classified form
- carrying out a parallel weighted connected process, in which the weights can be set depending on the use case, each of the following three modules calculating a probability that a token is or is not personal information that must be anonymized:
• running a process composed of a rules-based model (RBM) that implements different rules to discover some classes of entities, which can be associated with sensitive data related to the category of numbers, applying as appropriate an additional validation performed on all personal numbers in which there is a control validation, the verification figure or the verification amount, which allows the disambiguation and increase of the certainty of the cases;
• development of a lexicon-based model process (LBMS) that combines the results of the morphosyntactic analysis process (MAP), a set of lexicons and derivation and lemmatization techniques, in order to recognize the classes of entities, respectively personal data but not limited by them;
• developing a model process based on machine learning (MPBML) to validate previous processes and discover the classes of entities with a higher ambiguity or for cases where there are no well-defined rules, with maximum results due to neural networks;
- carrying out a function process with the role of establishing the weighted sum of probabilities that can be compared with a threshold.
- carrying out a post-processing with the role of returning the identified entities, in the desired format and activating the data output function.

5. Programme product recorded on a computer-readable medium, and which when run on the computer is intended to implement the method for anonymizing the personal data of the persons in an audio / video conversation, according to claims 3 and 4.
